# EUROPEAN PATENT APPLICATION

(11) **EP 3 373 160 A1**
(43) Date of publication of application: **12.09.2018**
(21) Application number: 16880754.3
(22) Date of filing: 26.10.2016
(51) Int. Cl.: G06F 17/30

(54) **STATIC WEBPAGE PROCESSING METHOD AND DEVICE**

(30) Priority: 31.12.2015 CN 201511030782
(71) Applicant: Huawei Technologies Co., Ltd., Longgang District Shenzhen, Guangdong 518129 (CN)
(72) Inventor: LIAO, Wei, Shenzhen Guangdong 518129 (CN)
(74) Representative: Gill Jennings & Every LLP
(86) International application number: PCT/CN2016/103418
(87) International publication number: WO 2017/113963

(57) **Abstract**

Embodiments of the present invention disclose a staticized-page processing method. A first staticized HTML page buffered at a server side not only includes an HTML markup and first script code used to define or declare a script variable on a page, but also includes second script code used to update a script variable value of at least one script variable in the first script code. Therefore, when a client requests a page from the server side, the server side sends, to the client, the first staticized HTML page including the second script code. After rendering, according to the HTML markup and the first script code, the page requested by the client, the client updates the script variable value of the at least one script variable in the first script code according to the second script code.

## Description

This application claims priority to Chinese Patent Application No. 201511030782.4, filed with the Chinese Patent Office December 31, 2015 and entitled "STATICIZED-PAGE PROCESSING METHOD AND APPARATUS", which is incorporated herein by reference in its entirety.

### TECHNICAL FIELD

Embodiments of the present invention relate to the field of computer technologies, and in particular, to a staticized-page processing method and apparatus.

### BACKGROUND

A full name of MVC in English is model view controller, that is, MVC is an acronym for model (Model), view (View), and controller (Controller). The view is an interface that a user can see and interact with. The model indicates service data and service logic between service data. The controller receives an input of the user, and invokes the model and the view to complete a user requirement.

A current client (Client) MVC framework includes a client and a server side. The client includes a browser, and the server side includes a resource server and an application server. After receiving a page request submitted by the user, the browser accesses the resource server to obtain a code file corresponding to a page; then executes the code file by using a JavaScript (js for short) engine; invokes the application server in the execution process to obtain model data and view data; and finally, binds the obtained model data and view data to obtain an interface, so as to present the interface to the user.

A dynamic-page technology is widely applied due to features such as high interactivity and real-time data refresh. However, when using a dynamic web page, the user needs to frequently access a server. Consequently, resources are wasted, and an access time is prolonged. Therefore, a staticized page emerges. The staticized page is a staticized file that is stored at the server side and that may be directly run at the client. During access, the user does not need to dynamically access a server side resource by using an interface any longer, but directly feeds back Hypertext Markup Language (English: HyperText Markup Language, HTML for short) code from the server side to the client, so as to display the page to the user at the client by using the HTML code.

In a current staticized page technology, only HTML code corresponding to a generated staticized page is stored. However, in the ClientMVC framework, when performing page behavior control, the controller further needs to make a decision by using model-related data. Consequently, if the HTML code is stored, an error may occur in service interaction logic, or unnecessary load may be caused for the server due to re-invoking the model-related data from the server.

### SUMMARY

Embodiments of the present invention provide a staticized-page processing method and apparatus, so as to resolve a prior-art problem that an error occurs in service interaction logic or unnecessary load is caused for a server due to re-invoking model-related data from the server.

According to a first aspect, an embodiment of the present invention provides a staticized-page processing method, where the method includes:
receiving, by a server side, a page request sent by a client, where the page request carries a page identifier of a page requested by the client; obtaining, by the server side, a stored first staticized Hypertext Markup Language HTML page corresponding to the page identifier, where the first staticized HTML page includes an HTML markup, first script code, and second script code, the first script code includes a definition or a declaration of a script variable on the page requested by the client, and the second script code is used to update a script variable value of at least one script variable in the first script code; and sending, by the server side, the first staticized HTML page to the client.

The page identifier may be a uniform resource locator (English: Uniform Resource Locator, URL for short). Script code may be script code of JavaScript, or script code of ActionScript, or script code of VBScript, or certainly may be script code described in another type of script language.

When a page is rendered and buffered, a staticized HTML page obtained by means of rendering is stored, and in addition, script code carrying a model in a rendering process is buffered. Therefore, it can be ensured that when presenting a staticized page, the client performs re-rendering by using the script code carrying the model in the rendering process. Therefore, a service interaction logic error caused by a script variable value change is avoided, and model-related data does not need to be invoked from a server any longer, so that load of the server is not increased, and a server resource is not wasted.

In a possible design, the first staticized HTML page is generated in the following manner:
performing, by the server side, simulation rendering on the page that is corresponding to the page identifier and is requested by the client, to obtain a second staticized HTML page, where the second staticized HTML page includes the HTML markup and the first script code; obtaining, by the server side, the script variable value that is of the at least one script variable and is obtained after simulation rendering is performed; building, by the server side, the second script code based on the script variable value of the at least one script variable; and inserting, by the server side, the second script code into an area following the last segment of script code in the second staticized HTML page, to obtain the first staticized HTML page.

Simulation rendering is a process in which the server side simulates rendering of a page by a client browser with the help of a tool such as a script engine.

In the foregoing design, the second script code is inserted into the area following the last segment of script code in the second staticized HTML page. Therefore, when executing code, the client first performs page rendering, and then assigns a value to a script variable, so as to prevent a logic error.

In a possible design, the second script code includes at least one assignment statement, and the at least one assignment statement is used to update the script variable value of the at least one script variable.

In a possible design, the second script code includes at least one serialized character string and a deserialization instruction, the at least one serialized character string is obtained by serializing the script variable value of the at least one script variable, and the deserialization instruction is used to instruct the client to: perform deserialization processing on the at least one serialized character string, and assign, to the at least one script variable, a result obtained by performing deserialization processing.

In a possible design, the serialized character string is a character string in a JavaScript object notation format or a character string in an Extensible Markup Language XML format.

In a possible design, the obtaining, by the server side, the script variable value that is of the at least one script variable and is obtained after simulation rendering is performed may be implemented in the following manner:
querying, by the server side, rendering configuration corresponding to the page identifier, where the rendering configuration includes a script variable identifier corresponding to a script variable that needs to be updated by the client on the page corresponding to the page identifier; and obtaining, by the server side, a script variable value corresponding to the script variable identifier.

In a possible design, the obtaining, by the server side, a script variable value corresponding to the script variable identifier includes:
obtaining, by the server side by using an application programming interface API of a script engine, the script variable value corresponding to the script variable identifier.

In a possible design, a script language corresponding to the script variable is JavaScript or ActionScript.

According to a second aspect, an embodiment of the present invention provides a staticized-page processing method, where the method includes:
sending, by a client, a page request to a server side, where the page request carries a page identifier of a page requested by the client; receiving, by the client, a first staticized HTML page that is sent by the server side and is corresponding to the page identifier, where the first staticized HTML page includes an HTML markup, first script code, and second script code, the first script code includes a definition or a declaration of a script variable on the page requested by the client, and the second script code is used to update a script variable value of at least one script variable in the first script code; rendering, by the client according to the HTML markup and the first script code, the page requested by the client; and updating, by the client, the script variable value of the at least one script variable in the first script code according to the second script code.

In a possible design, the second script code includes at least one assignment statement, and the at least one assignment statement is used to update the script variable value of the at least one script variable; and
the updating, by the client, the script variable value of the at least one script variable in the first script code according to the second script code may be implemented in the following manner:
executing, by the client, the at least one assignment statement, to update the script variable value of the at least one script variable.

In a possible design, the second script code includes at least one serialized character string and a deserialization instruction, the at least one serialized character string is obtained by serializing the script variable value of the at least one script variable, and the deserialization instruction is used to instruct the client to: perform deserialization processing on the at least one serialized character string, and assign, to the at least one script variable, a result obtained by performing deserialization processing; and
the updating, by the client, the script variable value of the at least one script variable in the first script code according to the second script code may be implemented in the following manner:
executing, by the client, the deserialization instruction to perform deserialization processing on the at least one serialized character string, so as to obtain the script variable value of the at least one script variable; and assigning the script variable value of the at least one script variable to the at least one script variable in the first script code.

In a possible design, the second script code is the last segment of script code in the first staticized page.

According to a third aspect, an embodiment of the present invention provides a staticized-page processing apparatus, where the apparatus is applied to a server side, and includes:
a routing module, configured to receive a page request sent by a client, where the page request carries a page identifier of a page requested by the client; and
a buffering module, configured to store a staticized HTML page that is of the page and needs to be stored, where the first staticized HTML page includes an HTML markup, first script code, and second script code, the first script code includes a definition or a declaration of a script variable on the page requested by the client, and the second script code is used to update a script variable value of at least one script variable in the first script code, where
the routing module is further configured to: obtain, from the buffering module, the stored first staticized HTML page corresponding to the page identifier, and then send the first staticized HTML page to the client.

In a possible design, the apparatus further includes:
a scheduling module and a rendering module, where
the scheduling module is configured to send a rendering notification to the rendering module, where the rendering notification carries the identifier of the page that needs to be rendered; and
the rendering module is configured to: after receiving the rendering notification sent by the scheduling module, perform simulation rendering on the page that is corresponding to the page identifier and is requested by the client, to obtain a second staticized HTML page, where the second staticized HTML page includes the HTML markup and the first script code; obtain the script variable value that is of the at least one script variable and is obtained after simulation rendering is performed; build the second script code based on the script variable value of the at least one script variable; insert the second script code into an area following the last segment of script code in the second staticized HTML page, to obtain the first staticized HTML page; and instruct the buffering module to store the first staticized HTML page.

In a possible design, the second script code includes at least one assignment statement, and the at least one assignment statement is used to update the script variable value of the at least one script variable.

In a possible design, the second script code includes at least one serialized character string and a deserialization instruction, the at least one serialized character string is obtained by serializing the script variable value of the at least one script variable, and the deserialization instruction is used to instruct the client to: perform deserialization processing on the at least one serialized character string, and assign, to the at least one script variable, a result obtained by performing deserialization processing.

In a possible design, the serialized character string is a character string in a JavaScript object notation format or a character string in an Extensible Markup Language XML format.

In a possible design, the apparatus further includes:
a configuration module, configured to configure rendering configuration, where the rendering configuration includes a script variable identifier corresponding to a script variable that needs to be updated by the client on the page corresponding to the page identifier, where
when obtaining the script variable value that is of the at least one script variable and is obtained after simulation rendering is performed, the rendering module is specifically configured to: query the script variable identifier that is corresponding to the page identifier and is included in the rendering configuration configured in the configuration module, and obtain a script variable value corresponding to the script variable identifier.

In a possible design, when obtaining the script variable value corresponding to the script variable identifier, the rendering module is specifically configured to:
obtain, by using an application programming interface API of a script engine, the script variable value corresponding to the script variable identifier.

In a possible design, a script language corresponding to the script variable is JavaScript or ActionScript.

According to a fourth aspect, an embodiment of the present invention provides a staticized-page processing apparatus, where the apparatus is applied to a client, and the apparatus includes:
a sending module, configured to send a page request to a server side, where the page request carries a page identifier of a page requested by the client;
a receiving module, configured to receive a first staticized HTML page that is sent by the server side and is corresponding to the page identifier, where the first staticized HTML page includes an HTML markup, first script code, and second script code, the first script code includes a definition or a declaration of a script variable on the page requested by the client, and the second script code is used to update a script variable value of at least one script variable in the first script code; and
a page rendering module, configured to: render, according to the HTML markup and the first script code that are received by the receiving module, the page requested by the client, and update the script variable value of the at least one script variable in the first script code according to the second script code received by the receiving module.

In a possible design, the second script code includes at least one assignment statement, and the at least one assignment statement is used to update the script variable value of the at least one script variable; and
when updating the script variable value of the at least one script variable in the first script code according to the second script code, the page rendering module is specifically configured to:
execute the at least one assignment statement, to update the script variable value of the at least one script variable.

In a possible design, the second script code includes at least one serialized character string and a deserialization instruction, the at least one serialized character string is obtained by serializing the script variable value of the at least one script variable, and the deserialization instruction is used to instruct the client to: perform deserialization processing on the at least one serialized character string, and assign, to the at least one script variable, a result obtained by performing deserialization processing; and
when updating the script variable value of the at least one script variable in the first script code according to the second script code, the page rendering module is specifically configured to:
execute the deserialization instruction to perform deserialization processing on the at least one serialized character string, so as to obtain the script variable value of the at least one script variable; and assign the script variable value of the at least one script variable to the at least one script variable in the first script code.

In a possible design, the second script code is the last segment of script code in the first staticized HTML page.

When a page is rendered and buffered, a staticized HTML page obtained by means of rendering is stored, and in addition, script code carrying a model in a rendering process is buffered. Therefore, it can be ensured that when presenting a staticized page, the client performs re-rendering by using the script code carrying the model in the rendering process. Therefore, a service interaction logic error caused by a script variable value change is avoided, and model-related data does not need to be invoked from a server any longer, so that load of the server is not increased, and a server resource is not wasted.

### BRIEF DESCRIPTION OF DRAWINGS

FIG. 1 is a schematic diagram of a ClientMVC framework according to an embodiment of the present invention;
FIG. 2 is a schematic structural diagram of a client according to an embodiment of the present invention;
FIG. 3 is a schematic structural diagram of a server side according to an embodiment of the present invention;
FIG. 4 is a schematic diagram of interactively performing staticized-page processing by modules in a client and on a server side according to an embodiment of the present invention;
FIG. 5 is a schematic diagram of a method for generating a first staticized HTML page by a server side according to an embodiment of the present invention;
FIG. 6 is a schematic diagram of another method for generating a first staticized HTML page by a server side according to an embodiment of the present invention; and
FIG. 7 is a flowchart of a staticized-page processing method according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are only some rather than all of the embodiments of the present invention. All other embodiments obtained by persons of ordinary skill in the art based on the embodiments of the present invention without creative efforts shall fall within the protection scope of the present invention.

The embodiments of the present invention provide a staticized-page processing method and apparatus, so as to resolve a prior-art problem that an error occurs in service interaction logic or unnecessary load is caused for a server due to re-invoking model-related data from the server. The method and the apparatus are based on a same invention concept. Because problem-resolving principles of the method and the apparatus are similar, for implementation of the apparatus and the method, refer to the apparatus and the method mutually. No repeated description is provided.

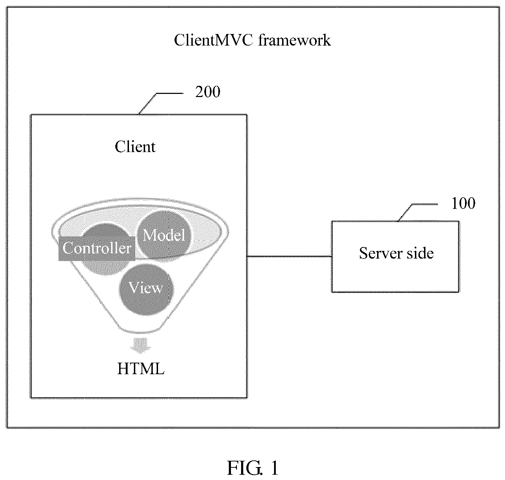

The embodiments of the present invention are applied to a ClientMVC framework. As shown in FIG. 1, the ClientMVC framework includes a client 200 and a server side 100. The client 200 can execute a controller function, a model function, and a view function.

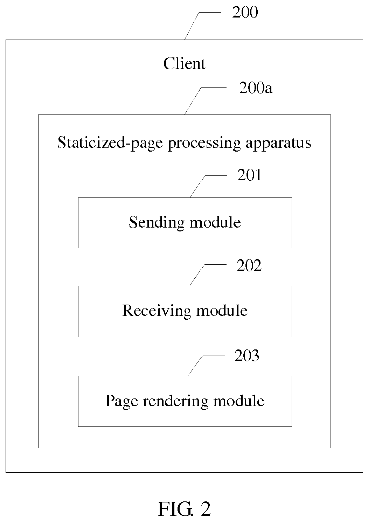

As shown in FIG. 2, FIG. 2 shows a staticized-page processing apparatus 200a that can implement a function of the client 200 according to an embodiment of the present invention. The staticized-page processing apparatus 200a that implements the function of the client 200 includes a sending module 201, a receiving module 202, and a page rendering module 203.

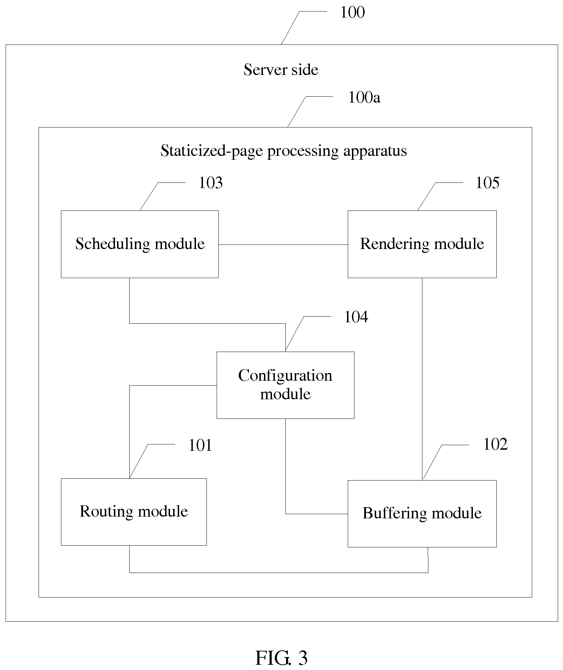

As shown in FIG. 3, FIG. 3 shows a staticized-page processing apparatus 100a that can implement a function of the server side 100 according to an embodiment of the present invention. The staticized-page processing apparatus that implements the function of the server side 100 includes a routing module 101 and a buffering module 102.

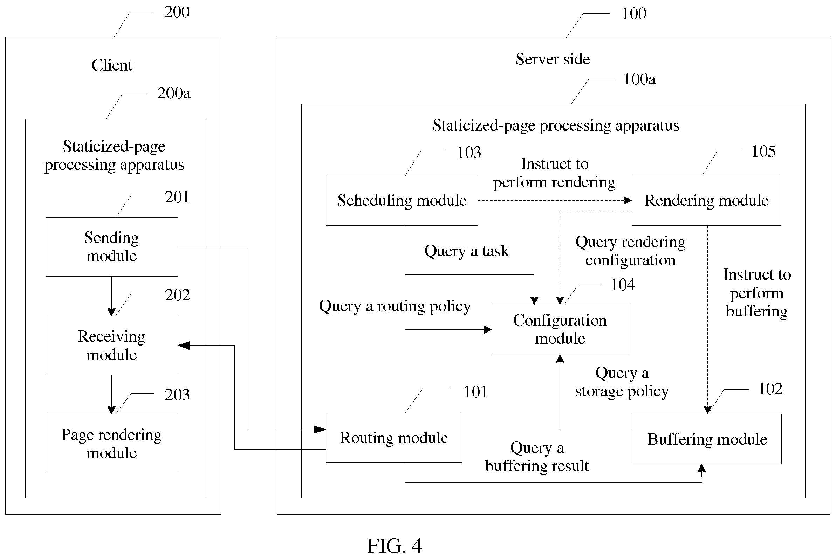

FIG. 4 is a schematic diagram of interactively performing staticized-page processing by modules in the client 200 and on the server side 100 according to an embodiment of the present invention.

The sending module 201 of the client 200 sends a page request to the server side 100. The page request carries a page identifier of a page requested by the client 200. Accordingly, the routing module 101 of the server side 100 receives the page request.

The routing module 101 is configured to receive the page request sent by the client 200. The page request carries the page identifier. The page identifier may be a uniform resource locator (English: Uniform Resource Locator, URL for short).

The buffering module 102 is configured to store a staticized HTML page that is of the page and needs to be stored. The first staticized HTML page includes an HTML markup, first script code, and second script code. The first script code includes a definition or a declaration of a script variable on the page requested by the client 200. The second script code is used to update a script variable value of at least one script variable in the first script code.

Script code may be script code of JavaScript, or script code of ActionScript, or script code of VBScript, or certainly may be script code described in another type of script language. No limitation is specifically imposed in this embodiment of the present invention.

The routing module 101 is further configured to: obtain, from the buffering module 102, the stored first staticized HTML page corresponding to the page identifier, and then send the first staticized HTML page to the client 200.

The receiving module 202 of the client 200 receives the first staticized HTML page that is sent by routing module 101 on the server side 100 and is corresponding to the page identifier. The first staticized HTML page includes the HTML markup, the first script code, and the second script code. The first script code includes the definition or the declaration of the script variable on the page requested by the client 200. The second script code is used to update the script variable value of the at least one script variable in the first script code.

The page rendering module 203 of the client 200 is configured to: render, according to the HTML markup and the first script code that are received by the receiving module 202, the page requested by the client 200, and update the script variable value of the at least one script variable in the first script code according to the second script code received by the receiving module 202.

Optionally, the staticized-page processing apparatus 100a that implements the function of the server side 100 further includes a scheduling module 103 and a rendering module 105.

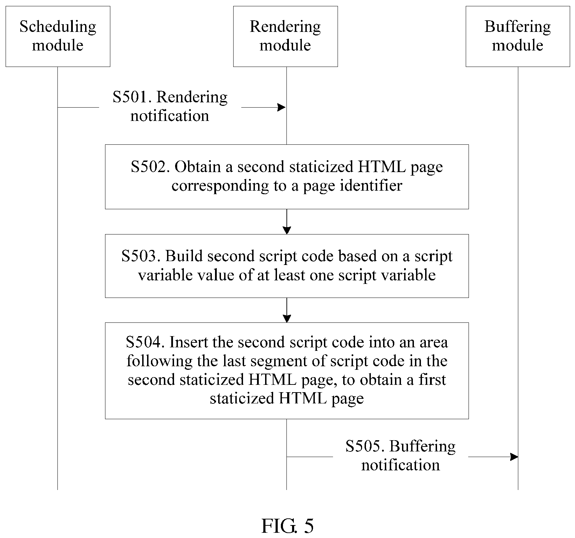

As shown in FIG. 5, the staticized-page processing apparatus 100a that implements the function of the server side 100 specifically generates the first staticized HTML page by using the scheduling module 103 and the rendering module 105.

S501. The scheduling module 103 sends a rendering notification to the rendering module 105, where the rendering notification carries the identifier of the page that needs to be rendered.

S502. The rendering module 105 receives the rendering notification, and then the rendering module 105 obtains a second staticized HTML page corresponding to the page identifier, where the second staticized HTML page includes the HTML markup and the first script code, and obtains the script variable value that is of the at least one script variable and is obtained after simulation rendering is performed.

The first staticized HTML page mentioned in this embodiment of the present invention is a staticized HTML page into which the second script code is inserted, and the second staticized HTML page is a staticized HTML page into which the second script code is not inserted, that is, a buffered staticized HTML page in the prior art.

Simulation rendering is a process in which the server side simulates rendering of a page by a client browser with the help of a tool such as a script engine.

Specifically, the rendering module 105 may perform, by using the script engine, simulation rendering on the page that is corresponding to the page identifier and is requested by the client 200, to obtain the second staticized HTML page.

The script engine may be a JavaScript engine, or may be a script engine corresponding to another script language. No limitation is specifically imposed in this embodiment of the present invention.

Specifically, the second staticized HTML page is obtained by using a method in which the JavaScript engine is used to directly invoke a corresponding ClientMVC framework.

S503. The rendering module 105 builds the second script code based on the script variable value of the at least one script variable.

The second script code may be script code of JavaScript or script code of ActionScript, or may be script code corresponding to another script language.

The second script code is built based on the script variable value of the at least one script variable, and the built second script code is mainly used to update the script variable value of the at least one script variable in the first script code.

S504. The rendering module 105 inserts the second script code into an area following the last segment of script code in the second staticized HTML page, to obtain the first staticized HTML page.

For example, the second script code is as follows:

```
         <!-- the dynamically inserted second script code -->
         <script>
              A=1;
              B="1111";
              AA=eval('{{"a":1,"b":{"b1":"acb"}}});
         </script>
```

The second script code is inserted into the area following the last segment of script code in the second staticized HTML page, to obtain the first staticized HTML page, and code corresponding to the first staticized HTML page is as follows:

```
         <html>
               <head>
               </head>
               <body>
                    <!-- a staticized HTML markup -->
                     ............
                     --> the first script code included in or referred to by the page
                    <script>
                     ............
                         Var A=0;
                         Var B="";
                         Var AA=null;
                    </script>
                    <!- the last segment of script code in the second staticized
                    HTML page mentioned above -->
                    <!- the dynamically inserted second script code -->
                    <script>
                         A=1;
                         B="1111";
                         AA=eval('{{"a":1,"b":{"b1":"acb"}}});
                    </script>
               </body>
         </html>
```

S505. The rendering module 105 sends a buffering notification to the buffering module 102, where the buffering notification is used to instruct the buffering module 102 to store the first staticized HTML page.

Optionally, the second script code includes at least one assignment statement, and the at least one assignment statement is used to update the script variable value of the at least one script variable.

For example, two assignment statements are as follows:

```
         A=1;
         B="1111";
```

herein, script variables are respectively A and B, and the two assignment statements are used to update a value of A to 1, and update a value of B to "1111".

If the second script code includes at least one assignment statement, and the at least one assignment statement is used to update the script variable value of the at least one script variable, when updating the script variable value of the at least one script variable in the first script code according to the second script code, the page rendering module 203 is specifically configured to execute the at least one assignment statement, to update the script variable value of the at least one script variable.

Optionally, the second script code includes at least one serialized character string and a deserialization instruction. The at least one serialized character string is obtained by serializing the script variable value of the at least one script variable. The deserialization instruction is used to instruct the client 200 to: perform deserialization processing on the at least one serialized character string, and assign, to the at least one script variable, a result obtained by performing deserialization processing.

Specifically, after obtaining the script variable value of the at least one script variable, the rendering module 105 performs serialization processing on the script variable value of the at least one script variable to obtain the character string, and builds the second script code based on the character string obtained by means of serialization processing.

For example, the character string is as follows:

```
         AA=eval('{{"a":1,"b":{"b1":"acb"}}}).
```

When the rendering module 105 performs serialization processing on the script variable value to obtain the character string, any algorithm supported by the client may be used as a serialization processing algorithm. Specifically, serialization processing may be performed on the script variable value by using an algorithm such as a JavaScript object notation (English: JavaScript Object Notation, JSON for short) serialization algorithm or an Extensible Markup Language (English: Extensible Markup Language, XML for short) serialization algorithm, to obtain the character string. Therefore, the serialized character string is a character string in a JavaScript object notation format, or a character string in an Extensible Markup Language XML format, or the like.

Herein, the script variable value that is of the at least one script variable and needs to be sent to the client 200 is a script variable value corresponding to a model.

If the second script code includes at least one serialized character string and a deserialization instruction, when updating the script variable value of the at least one script variable in the first script code according to the second script code, the page rendering module 203 is specifically configured to:
execute the deserialization instruction to perform deserialization processing on the at least one serialized character string, so as to obtain the script variable value of the at least one script variable; and assign the script variable value of the at least one script variable to the at least one script variable in the first script code.

Optionally, the staticized-page processing apparatus 100a that implements the function of the server side 100 may further include a configuration module 104. The configuration module 104 is configured to configure rendering configuration. The rendering configuration includes a script variable identifier corresponding to a script variable that needs to be updated by the client 200 on the page corresponding to the page identifier. That is, the configuration module 104 configures script variable identifiers corresponding to multiple pages, and therefore, configures a correspondence between a page identifier and a script variable identifier during configuration.

There is a large quantity of script variables on one page. Herein, the configuration module 104 does not configure script variable identifiers of all script variables on one page, but a script variable identifier of a script variable on which a buffering operation needs to be performed. Therefore, the configuration module 104 configures an identifier of a script variable on which the buffering operation needs to be performed on a page. The configured script variable identifier indicates that a script variable value corresponding to an identifier of a script variable on the buffered second staticized HTML page may be changed.

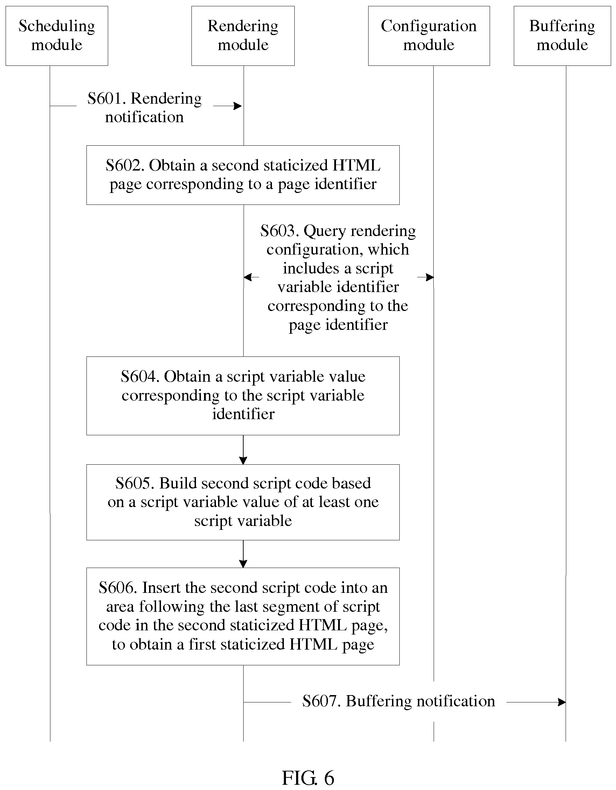

In this case, as shown in FIG. 6, the staticized-page processing apparatus 100a that implements the function of the server side 100 specifically generates staticized HTML page content by using the scheduling module 103, the configuration module 104, and the rendering module 105.

S601. The scheduling module 103 sends a rendering notification to the rendering module 105, where the rendering notification carries the identifier of the page that needs to be rendered.

S602. The rendering module 105 receives the rendering notification, and then the rendering module 105 obtains a second staticized HTML page corresponding to the page identifier.

S603. The rendering module 105 queries the script variable identifier that is corresponding to the page identifier and is included in the rendering configuration configured in the configuration module 104.

S604. The rendering module 105 obtains a script variable value corresponding to the script variable identifier.

A script variable value of a script variable that needs to be buffered may be modified. Therefore, the script variable value corresponding to the script variable identifier needs to be obtained herein.

In a process in which the script variable value corresponding to the script variable identifier is obtained, the script variable value corresponding to the script variable identifier may be specifically obtained by using an application programming interface (English: Application Programming Interface, API for short) of a script engine.

S605. The rendering module 105 builds the second script code based on the script variable value of the at least one script variable.

S606. The rendering module 105 inserts the second script code into an area following the last segment of script code in the second staticized HTML page, to obtain the first staticized HTML page.

S607. The rendering module 105 sends a buffering notification to the buffering module 102, where the buffering notification is used to instruct the buffering module 102 to store the first staticized HTML page.

When a page is rendered and buffered, a staticized HTML page obtained by means of rendering is stored, and in addition, script code carrying a model in a rendering process is buffered. Therefore, it can be ensured that when presenting a staticized page, the client performs re-rendering by using the script code carrying the model in the rendering process. Therefore, a service interaction logic error caused by a script variable value change is avoided, and model-related data does not need to be invoked from a server any longer, so that load of the server is not increased, and a server resource is not wasted.

Optionally, a staticized execution task defined for a URL is further configured in the configuration module 104. The staticized execution task further specifies a staticized buffering refresh policy. The staticized buffering refresh policy may be executed periodically, that is, staticized buffering is performed on a page corresponding to the URL at an interval of a preset time length. The staticized refresh policy may further be executed based on an event notification. For example, a user subscribes a service event, and when receiving a notification of subscribing the service event, staticized buffering is performed on the page corresponding to the URL. Therefore, when scheduling the staticized execution task configured in the configuration module 104, the scheduling module 103 may perform scheduling by using the staticized buffering refresh policy.

A routing policy may further be configured in the configuration module 104. The routing policy is used to specify whether staticized buffering routing is enabled for the page corresponding to the URL, and specify configuration data that needs to be used in a routing decision process. Therefore, after receiving a page request sent by the client 200, the routing module 101 queries the configuration module 104 to find whether staticized buffering routing is enabled for a page corresponding to a URL carried in the page request, and if staticized buffering routing is enabled, queries a buffering result in the buffering module 102 according to the configuration data. The buffering result is a staticized HTML page of the page corresponding to the URL, and the staticized HTML page includes the script code used to update a script variable value that is of a script variable on the staticized HTML page and that is obtained after rendering is performed.

A storage policy may further be configured in the configuration module 104. The storage policy is used to specify a storage policy for a staticized HTML page obtained by rendering a page corresponding to a URL. For example, hotspot data is stored in a local memory or a distributed memory, and other data is stored in a disk. Therefore, when receiving a notification that is sent by the rendering module and instructs to buffer the first staticized HTML page obtained by inserting the built second script code into the second staticized HTML page, the buffering module 102 queries the storage policy configured in the configuration module, and buffers, according to the storage policy obtained by means of query, the first staticized HTML page obtained by inserting the built second script code into the second staticized HTML page.

Unit division in this embodiment of the present invention is an example, is only logical function division, and may be other division in actual implementation. In addition, functional units in the embodiments of this application may be integrated in one processor, or may exist alone physically, or two or more units are integrated into one unit. The integrated unit may be implemented in a form of hardware, or may be implemented in a form of a software functional module.

When the integrated unit is implemented in a form of hardware, physical hardware of the client 200 corresponding to the sending module 201, the receiving module 202, and the page rendering module 203 may be a processor. Physical hardware of the server side 100 corresponding to the routing module 101, the buffering module 102, the scheduling module 103, the configuration module 104, and the rendering module 105 may be a processor. The processor may be a central processing unit (English: central processing unit, CPU for short), a digital processing unit, or the like. The client 200 further includes a memory, configured to store a program for execution by a processor in the client 200. The processor is configured to execute the program stored in the memory. The server side 100 further includes a memory, configured to store a program for execution by a processor in the server side 100. The memory in the server side 100 is further configured to store staticized page content.

The memory may be a volatile memory (English: volatile memory) such as a random-access memory (English: random-access memory, RAM for short). Alternatively, the memory may be a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory is any other medium that can be used to carry or store expected program code in a command or data structure form and that can be accessed by a computer. However, this is not limited thereto. The memory may be a combination of the foregoing memories.

According to the solutions provided in this embodiment of the present invention, when the page is rendered and buffered, the second staticized HTML page obtained by means of rendering is stored, and in addition, the second script code carrying the model in the rendering process is buffered, to obtain the first staticized HTML page. The server side sends the first staticized HTML page to the client, that is, corresponding processing logic is inserted into the generated page. Therefore, it can be ensured that when presenting the staticized page, the client performs re-rendering by using the second script code carrying the model, and re-assigns, by using the second script code, a value to a script variable that needs to be updated. Therefore, it can be ensured that script execution context related to the page is consistent with that existing before the staticized page is stored, and consistency in user interaction logic is ensured, so that it is ensured that in the ClientMVC framework, execution logic existing after staticized buffering is enabled is consistent with execution logic existing when staticized buffering is not enabled. Therefore, a service interaction logic error caused by a script variable value change is avoided, and model-related data does not need to be invoked from a server any longer, so that load of the server is not increased, and a server resource is saved.

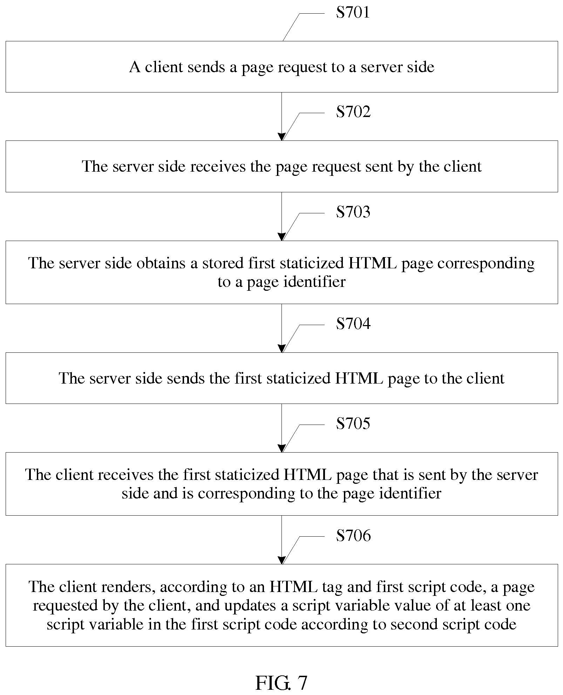

An embodiment of the present invention provides a staticized-page processing method. As shown in FIG. 7, the method includes the following steps.

S701. A client sends a page request to a server side, where the page request carries a page identifier of a page requested by the client.

The page identifier may be a URL.

S702. The server side receives the page request sent by the client.

S703. The server side obtains a stored first staticized HTML page corresponding to the page identifier, where the first staticized HTML page includes an HTML markup, first script code, and second script code, the first script code includes a definition or a declaration of a script variable on the page requested by the client, and the second script code is used to update a script variable value of at least one script variable in the first script code.

S704. The server side sends the first staticized HTML page to the client.

S705. The client receives the first staticized HTML page that is sent by the server side and is corresponding to the page identifier, where the first staticized HTML page includes the HTML markup, the first script code, and the second script code, the first script code includes the definition or the declaration of the script variable on the page requested by the client, and the second script code is used to update the script variable value of the at least one script variable in the first script code.

S706. The client renders, according to the HTML markup and the first script code, the page requested by the client, and updates the script variable value of the at least one script variable in the first script code according to the second script code.

Optionally, the first staticized HTML page is generated in the following manner:
A1. The server side performs simulation rendering on the page that is corresponding to the page identifier and is requested by the client, to obtain a second staticized HTML page, where the second staticized HTML page includes the HTML markup and the first script code.
A2. The server side obtains the script variable value that is of the at least one script variable and is obtained after simulation rendering is performed.
   Optionally, step A2 that the server side obtains the script variable value that is of the at least one script variable and is obtained after simulation rendering is performed may be implemented in the following manner:
   querying, by the server side, rendering configuration corresponding to the page identifier, where the rendering configuration includes a script variable identifier corresponding to a script variable that needs to be updated by the client on the page corresponding to the page identifier; and
   obtaining, by the server side, a script variable value corresponding to the script variable identifier.

   The obtaining, by the server side, a script variable value corresponding to the script variable identifier may be implemented in the following manner:
   obtaining, by the server side by using an application programming interface API of a script engine, the script variable value corresponding to the script variable identifier.
   A script language corresponding to the script variable is JavaScript or ActionScript.
   Optionally, the second script code includes at least one assignment statement, and the at least one assignment statement is used to update the script variable value of the at least one script variable.
   Optionally, the second script code includes at least one serialized character string and a deserialization instruction. The at least one serialized character string is obtained by serializing the script variable value of the at least one script variable. The deserialization instruction is used to instruct the client to: perform deserialization processing on the at least one serialized character string, and assign, to the at least one script variable, a result obtained by performing deserialization processing.
   That the at least one serialized character string is obtained by serializing the script variable value of the at least one script variable is: after obtaining the script variable value of the at least one script variable, the server side performs serialization processing on the script variable value to obtain the serialized character string, and builds the second script code based on the serialized character string.
   That the server side performs serialization processing on the script variable value to obtain the serialized character string may be implemented in the following manner:
   performing, by the server side, serialization processing on the script variable value by using an algorithm such as a json serialization algorithm or an XML serialization algorithm, to obtain the serialized character string.
A3. The server side builds the second script code based on the script variable value of the at least one script variable.
A4. The server side inserts the second script code into an area following the last segment of script code in the second staticized HTML page, to obtain the first staticized HTML page.

Optionally, if the second script code includes at least one assignment statement, and the at least one assignment statement is used to update the script variable value of the at least one script variable, the updating, by the client, the script variable value of the at least one script variable in the first script code according to the second script code may be implemented in the following manner:
executing, by the client, the at least one assignment statement, to update the script variable value of the at least one script variable.

Optionally, if the second script code includes at least one serialized character string and a deserialization instruction, the at least one serialized character string is obtained by serializing the script variable value of the at least one script variable, and the deserialization instruction is used to instruct the client to: perform deserialization processing on the at least one serialized character string, and assign, to the at least one script variable, a result obtained by performing deserialization processing, the updating, by the client, the script variable value of the at least one script variable in the first script code according to the second script code may be implemented in the following manner:
executing, by the client, the deserialization instruction to perform deserialization processing on the at least one serialized character string, so as to obtain the script variable value of the at least one script variable; and assigning the script variable value of the at least one script variable to the at least one script variable in the first script code.

According to the solutions provided in this embodiment of the present invention, when a page is rendered and buffered, HTML code of a staticized page obtained by means of rendering is stored, and in addition, script code carrying a model in a rendering process is buffered. The server side sends, to the client, the Hypertext Markup Language HTML code and the script code that is corresponding to the model and is used to render the page, that is, corresponding processing logic is inserted into a generated staticized page. Therefore, it can be ensured that when presenting a staticized page, the client performs re-rendering by using the script code carrying the model in the rendering process. Therefore, it can be ensured that script execution context related to the page is consistent with that existing before the staticized page is stored, and consistency in user interaction logic is ensured, so that it is ensured that in a ClientMVC framework, execution logic existing after staticized buffering is enabled is consistent with execution logic existing when staticized buffering is not enabled. Therefore, a service interaction logic error caused by a script variable value change is avoided, and model-related data does not need to be invoked from a server any longer, so that load of the server is not increased, and a server resource is not wasted.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, so as to generate computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the embodiments and all changes and modifications falling within the scope of the present invention.

Obviously, persons skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A staticized-page processing method, comprising:
receiving, by a server side, a page request sent by a client, wherein the page request carries a page identifier of a page requested by the client;
obtaining, by the server side, a stored first staticized Hypertext Markup Language HTML page corresponding to the page identifier, wherein the first staticized HTML page comprises an HTML markup, first script code, and second script code, the first script code comprises a definition or a declaration of a script variable on the page requested by the client, and the second script code is used to update a script variable value of at least one script variable in the first script code; and
sending, by the server side, the first staticized HTML page to the client.

2. The method according to claim 1, wherein the first staticized HTML page is generated in the following manner:
performing, by the server side, simulation rendering on the page that is corresponding to the page identifier and is requested by the client, to obtain a second staticized HTML page, wherein the second staticized HTML page comprises the HTML markup and the first script code;
obtaining, by the server side, the script variable value that is of the at least one script variable and is obtained after simulation rendering is performed;
building, by the server side, the second script code based on the script variable value of the at least one script variable; and
inserting, by the server side, the second script code into an area following an last segment of script code in the second staticized HTML page, to obtain the first staticized HTML page.

3. The method according to claim 2, wherein the second script code comprises at least one assignment statement, and the at least one assignment statement is used to update the script variable value of the at least one script variable.

4. The method according to claim 2, wherein the second script code comprises at least one serialized character string and a deserialization instruction, the at least one serialized character string is obtained by serializing the script variable value of the at least one script variable, and the deserialization instruction is used to instruct the client to: perform deserialization processing on the at least one serialized character string, and assign, to the at least one script variable, a result obtained by performing deserialization processing.

5. The method according to claim 4, wherein the serialized character string is a character string in a JavaScript object notation format or a character string in an Extensible Markup Language XML format.

6. The method according to claim 2, wherein the obtaining, by the server side, the script variable value that is of the at least one script variable and is obtained after simulation rendering is performed comprises:
querying, by the server side, rendering configuration corresponding to the page identifier, wherein the rendering configuration comprises a script variable identifier corresponding to a script variable that needs to be updated by the client on the page corresponding to the page identifier; and
obtaining, by the server side, a script variable value corresponding to the script variable identifier.

7. The method according to claim 6, wherein the obtaining, by the server side, a script variable value corresponding to the script variable identifier comprises:
obtaining, by the server side by using an application programming interface API of a script engine, the script variable value corresponding to the script variable identifier.

8. The method according to any one of claims 1 to 7, wherein a script language corresponding to the script variable is JavaScript or ActionScript.

9. A staticized-page processing method, comprising:
sending, by a client, a page request to a server side, wherein the page request carries a page identifier of a page requested by the client;
receiving, by the client, a first staticized HTML page that is sent by the server side and is corresponding to the page identifier, wherein the first staticized HTML page comprises an HTML markup, first script code, and second script code, the first script code comprises a definition or a declaration of a script variable on the page requested by the client, and the second script code is used to update a script variable value of at least one script variable in the first script code;
rendering, by the client according to the HTML markup and the first script code, the page requested by the client; and
updating, by the client, the script variable value of the at least one script variable in the first script code according to the second script code.

10. The method according to claim 9, wherein the second script code comprises at least one assignment statement, and the at least one assignment statement is used to update the script variable value of the at least one script variable; and
the updating, by the client, the script variable value of the at least one script variable in the first script code according to the second script code comprises:
executing, by the client, the at least one assignment statement, to update the script variable value of the at least one script variable.

11. The method according to claim 9, wherein the second script code comprises at least one serialized character string and a deserialization instruction, the at least one serialized character string is obtained by serializing the script variable value of the at least one script variable, and the deserialization instruction is used to instruct the client to: perform deserialization processing on the at least one serialized character string, and assign, to the at least one script variable, a result obtained by performing deserialization processing; and
the updating, by the client, the script variable value of the at least one script variable in the first script code according to the second script code comprises:
executing, by the client, the deserialization instruction to perform deserialization processing on the at least one serialized character string, so as to obtain the script variable value of the at least one script variable; and assigning the script variable value of the at least one script variable to the at least one script variable in the first script code.

12. The method according to claim 9, wherein the second script code is the last segment of script code in the first staticized page.

13. A staticized-page processing apparatus, wherein the apparatus is applied to a server side, and comprises:
a routing module, configured to receive a page request sent by a client, wherein the page request carries a page identifier of a page requested by the client; and
a buffering module, configured to store a first staticized HTML page that is of the page and needs to be stored, wherein the first staticized HTML page comprises an HTML markup, first script code, and second script code, the first script code comprises a definition or a declaration of a script variable on the page requested by the client, and the second script code is used to update a script variable value of at least one script variable in the first script code, wherein
the routing module is further configured to: obtain, from the buffering module, the stored first staticized HTML page corresponding to the page identifier, and then send the first staticized HTML page to the client.

14. The apparatus according to claim 13, further comprising:
a scheduling module and a rendering module, wherein
the scheduling module is configured to send a rendering notification to the rendering module, wherein the rendering notification carries the identifier of the page that needs to be rendered; and
the rendering module is configured to: after receiving the rendering notification sent by the scheduling module, perform simulation rendering on the page that is corresponding to the page identifier and is requested by the client, to obtain a second staticized HTML page, wherein the second staticized HTML page comprises the HTML markup and the first script code; obtain the script variable value that is of the at least one script variable and is obtained after simulation rendering is performed; build the second script code based on the script variable value of the at least one script variable; insert the second script code into an area following the last segment of script code in the second staticized HTML page, to obtain the first staticized HTML page; and instruct the buffering module to store the first staticized HTML page.

15. The apparatus according to claim 14, wherein the second script code comprises at least one assignment statement, and the at least one assignment statement is used to update the script variable value of the at least one script variable.

16. The apparatus according to claim 14, wherein the second script code comprises at least one serialized character string and a deserialization instruction, the at least one serialized character string is obtained by serializing the script variable value of the at least one script variable, and the deserialization instruction is used to instruct the client to: perform deserialization processing on the at least one serialized character string, and assign, to the at least one script variable, a result obtained by performing deserialization processing.

17. The apparatus according to claim 16, wherein the serialized character string is a character string in a JavaScript object notation format or a character string in an Extensible Markup Language XML format.

18. The apparatus according to claim 14, further comprising:
a configuration module, configured to configure rendering configuration, wherein the rendering configuration comprises a script variable identifier corresponding to a script variable that needs to be updated by the client on the page corresponding to the page identifier, wherein
when obtaining the script variable value that is of the at least one script variable and is obtained after simulation rendering is performed, the rendering module is specifically configured to: query the script variable identifier that is corresponding to the page identifier and is comprised in the rendering configuration configured in the configuration module, and obtain a script variable value corresponding to the script variable identifier.

19. The apparatus according to claim 18, wherein when obtaining the script variable value corresponding to the script variable identifier, the rendering module is specifically configured to:
obtain, by using an application programming interface API of a script engine, the script variable value corresponding to the script variable identifier.

20. The apparatus according to any one of claims 13 to 19, wherein a script language corresponding to the script variable is JavaScript or ActionScript ActionScript.

21. A staticized-page processing apparatus, comprising:
a sending module, configured to send a page request to a server side, wherein the page request carries a page identifier of a page requested by a client;
a receiving module, configured to receive a first staticized HTML page that is sent by the server side and is corresponding to the page identifier, wherein the first staticized HTML page comprises an HTML markup, first script code, and second script code, the first script code comprises a definition or a declaration of a script variable on the page requested by the client, and the second script code is used to update a script variable value of at least one script variable in the first script code; and
a page rendering module, configured to: render, according to the HTML markup and the first script code that are received by the receiving module, the page requested by the client, and update the script variable value of the at least one script variable in the first script code according to the second script code received by the receiving module.

22. The apparatus according to claim 21, wherein the second script code comprises at least one assignment statement, and the at least one assignment statement is used to update the script variable value of the at least one script variable; and
when updating the script variable value of the at least one script variable in the first script code according to the second script code, the page rendering module is specifically configured to:
execute the at least one assignment statement, to update the script variable value of the at least one script variable.

23. The apparatus according to claim 21, wherein the second script code comprises at least one serialized character string and a deserialization instruction, the at least one serialized character string is obtained by serializing the script variable value of the at least one script variable, and the deserialization instruction is used to instruct the client to: perform deserialization processing on the at least one serialized character string, and assign, to the at least one script variable, a result obtained by performing deserialization processing; and
when updating the script variable value of the at least one script variable in the first script code according to the second script code, the page rendering module is specifically configured to:
execute the deserialization instruction to perform deserialization processing on the at least one serialized character string, so as to obtain the script variable value of the at least one script variable; and assign the script variable value of the at least one script variable to the at least one script variable in the first script code.

24. The apparatus according to claim 21, wherein the second script code is the last segment of script code in the first staticized HTML page.
